# EUROPÄISCHE PATENTSCHRIFT

(11) **EP 3 126 124 B1**
(45) Veröffentlichungstag und Bekanntmachung des Hinweises auf die Patenterteilung: **28.08.2024**
(21) Anmeldenummer: 15720585.7
(22) Anmeldetag: 27.03.2015
(51) Int. Cl.: B33Y 30/00, B33Y 40/00, B33Y 10/00, B29C 64/165, B29C 64/393

(54) **VERFAHREN UND VORRICHTUNG FÜR DEN 3D-DRUCK MIT KLIMATISIERTER VERFAHRENSFÜHRUNG**
METHOD AND DEVICE FOR 3D PRINTING USING TEMPERATURE-CONTROLLED PROCESSING
PROCÉDÉ ET DISPOSITIF POUR L'IMPRESSION 3D AVEC MISE EN OEUVRE CLIMATISÉE DU PROCÉDÉ

(30) Priorität: 31.03.2014 DE 102014004692
(43) Veröffentlichungstag der Anmeldung: 08.02.2017
(73) Patentinhaber: voxeljet AG, 86316 Friedberg (DE)
(72) Erfinder: GÜNTHER, Daniel, 81371 München (DE); GÜNTHER, Johannes, 86163 Augsburg (DE); GNÜCHTEL, Ingo, 86504 Merchting (DE); RUSSO, Massimo, 86199 Augsburg (DE)
(74) Vertreter: Hoefer & Partner Patentanwälte mbB
(86) Internationale Anmeldenummer: PCT/DE2015/000151
(87) Internationale Veröffentlichungsnummer: WO 2015/149742

(56) Entgegenhaltungen:
- EP-A1- 2 305 454
- EP-A1- 2 305 454
- WO-A2-2004/005014
- WO-A2-2004/005014
- WO-A2-2007/114895
- WO-A2-2007/114895
- WO-A2-98/28124
- WO-A2-98/28124
- US-A1- 2006 061 618
- US-A1- 2006 061 618
- UNKNOWN: "ZPrinter 310 User Manual", 30 September 2003 (2003-09-30), XP093013402, Retrieved from the Internet <URL:http://www.science.smith.edu/cdf/pdf_files/ZPrinter%20310%20User%20Manual.pdf> [retrieved on 20230111]

## Beschreibung

Die Erfindung betrifft ein Verfahren und eine Vorrichtung zum Herstellen dreidimensionaler Modelle mit einstellbaren Verfahrensparametern.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einem Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt (auch als Formteil oder Modell bezeichnet).

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden. Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Als Bindesystem kann z.B. ein Feststoff im Partikelmaterial dienen. Dieser wird durch ein aus dem Tintenstrahldruckkopf ausgestoßenes Lösemittel in Lösung gebracht. Nach dem Verflüchtigen des Lösemittels haften die Partikel an den gewünschten Stellen zusammen. Das Bauteil kann aus dem restlichen losen Pulver nach einer gewissen Wartezeit entnommen werden.

Als Bindesystem kann u.a. auch pulverförmiges Wasserglas verwendet werden. Dieses Material wird durch Eindrucken eines Wasser-basierten Fluides gelöst. Je nach Menge setzt sich nun dieses flüssige Wasserglas zwischen die Partikel. Die Härtung erfolgt durch verschiedene Mechanismen. Dominant ist allerdings das Abtrocknen der Bindeflüssigkeit. Dabei härtet das Wasserglas physikalisch. Es sind dem Fachmann auch andere Kombinationen von Partikelmaterialien, Binder und Fluiden bekannt. Ein Abtrocknen oder Abdampfen des Fluids in derartigen 3D-Druckprozessen bewirkt gleichermaßen eine Verfestigung und Bildung eines Formteiles.

Problematisch bei dem Härtungsprozess bzw. dem Abtrocknen oder Abdampfen des Fluids ist die Prozessführung. Ergebnis eines derartigen 3D-Drucks sind oft Bauteile mit nicht ausreichender Festigkeit und starken geometrischen Abweichungen.

In bekannten 3D-Druckverfahren werden zur Steigerung der Festigkeit und Steigerung der Oberflächengüte zum einen Prozessparameter geändert und zum Anderen das Materialsystem angepasst.

Die WO2012/175072 A1 beschreibt zum Beispiel eine Steuerung von Anhaftungen am Bauteil über verschiedene Zuschlagstoffe. Hier kann beispielsweise Zement zum Einsatz kommen der überschüssiges Wasser aufnimmt. Ebenso kann der Gehalt an Wasserglas gesteigert werden.

Beide Verfahren weisen gewisse Nachteile auf. Der Zement saugt quasi Feuchtigkeit ab und wirkt zum Teil wie eine vorzeitige Trocknung. Hierunter leidet die Festigkeit.

WO98/28124 beschreibt ein 3D Druckverfahren und eine Vorrichtung dazu, wobei ein Binder selektiv in eine Pulverbett eingebracht wird. Hierzu wird auch ein Filtersystem eingesetzt.

Der oben beschriebene Stand der Technik beschreibt die beanspruchte Erfindung nicht und legt diese auch nicht nahe.

Die Steigerung des Gehaltes an Wasserglas ist ebenso nützlich, um die Oberflächengüten positiv zu beeinflussen. Der Zugabemenge sind aber technische Grenzen gesetzt und die Wirtschaftlichkeit des Verfahrens wird negativ beeinflusst.

Die der Erfindung zugrunde liegende Aufgabe ist es deshalb die Nachteile der bekannten 3D-Verfahren zu vermindern oder ganz zu vermeiden. Insbesondere ist es ein Ziel der Erfindung die Festigkeit der so erzeugten Formteile zu steigern bei gleichzeitig guter Maßhaltigkeit oder/und Reduzierung der Streuung der vorgenannten Eigenschaften in derartigen Bauteilen.

Diese Aufgabe wird gelöst durch ein Verfahren nach Anspruch 1 und ein Verfahren nach Anspruch 7.

Die Lösung der Erfindungsaufgabe besteht grundsätzlich darin, die wässrige oder fluide Lösung und die Abtrocknung oder das Abdampfen durch eine gezielte Führung der Luftfeuchtigkeit oder des Lösemittels zu steuern. Dadurch wird ein günstiger Härtungsverlauf erzielt und man erhält Bauteile mit einer gewünschten und regulierbaren Festigkeit.

Die Erfinder haben ein vorteilhaftes Verfahren entwickelt, mit dem Formteile mit Wasser-basierten oder anderen fluid-basierten Materialien hergestellt werden können, die sowohl vorteilhafte Festigkeiten sowie zufriedenstellende Oberflächengüten aufweisen.

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren, die als einen Bestandteil wässrige Lösungen oder/und sonstige fluide Komponenten oder Lösemittel enthalten, die dem Formteil entzogen werden müssen oder die aus dem herzustellenden Formteil bei oder zu seiner Verfestigung entweichen. Die Verfestigung und die Qualität des Formteils können durch die Erfindung gezielt beeinflusst werden, wobei andere Qualitätsmerkmale gleich bleiben oder sogar positiv beeinflusst werden.

Unter "Druckflüssigkeit" wird eine im Wesentlichen wässrige oder fluide Flüssigkeit verstanden, die sich über Tintenstrahleinrichtungen verdrucken lässt. Die Druckflüssigkeit kann ein Materialgemisch sein, das aus Wasser und weiteren Zusätzen besteht, die z.B. die Viskosität und Oberflächenspannung beeinflussen. Zudem können in der Druckflüssigkeit Mittel zur Vermeidung von Pilz- und Pflanzenwuchs enthalten sein. Nicht zuletzt kann die Druckflüssigkeit ebenfalls bindefähige Materialien enthalten, die nach dem Trocknen zu einer gewissen Bindewirkung im Füllstoff führen.

Als "Füllstoff" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Der Füllstoff ist vorzugsweise ein trocken frei fließendes Pulver, jedoch kann auch ein kohäsives schnittfestes Pulver verwendet werden.

"Selektiver Binderauftrag" oder "Selektiver Bindersystemauftrag" oder "Binderflüssigkeitsauftrag" oder "Aufbringen der Binderflüssigkeit" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

Unter "Bindersystem" ist ein Materialsystem zu verstehen, das in der Lage ist, das Partikelmaterial zu binden. Das Bindersystem besteht mindestens aus einer zu verdruckenden "Binderflüssigkeit" und evtl. weiteren flüssigen oder feststoffförmigen Komponenten, die sich in der Binderflüssigkeit als auch im Partikelmaterial befinden können. Das Bindersystem kann chemisch oder physikalisch oder durch eine Kombination aus chemisch und physikalischem Prozess abbinden. Die Abbindung kann durch Zugabe von Energie z.B. in Form von Wärme oder Licht angestoßen oder beschleunigt werden. Allgemein kommen als Bindersystem alle dem Fachmann in dem Zusammenhang bekannten Materialsysteme in Betracht. Beispielhaft kann ein Bindersystem eine "Binderflüssigkeit" und einen feststoffförmigen "Binder" umfassen, der im Partikelmaterial (Baumaterial) enthalten ist und der in der Binderflüssigkeit löslich ist. Der Feststoff wird in diesem Fall durch das aus dem Tintenstrahldruckkopf ausgestoßene und auf das Partikelmaterial aufgetragene Lösemittel in Lösung gebracht. Nach dem im wesentlichen Verdampfen oder Trocknen der Binderflüssigkeit sind die selektiv bedruckten Bereiche des Baumaterials miteinander verbunden. Gleichermaßen kann mit dem Fachmann bekannten chemischen Systemen in der Binderflüssigkeit oder/und dem Partikelmaterial eine selektive Verfestigung erzeugt werden.

Unter "Bindemittel" wird eine pulverförmige Komponente verstanden, die in der Druckflüssigkeit im Wesentlichen löslich ist und im gelösten Zustand eine Bindewirkung entfaltet, insbesondere wenn sich der Binder im Füllstoff befindet. Als Bindemittel sind z.B. Wasserglas aber auch Zement-Binder geeignet.

"Formkörper", "Modell", "3D-Formteil" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung, Druckkopf, Wärmemittel, Verfahrmittel für Batchverfahren oder kontinuierliche Verfahren und andere dem Fachmann bekannte Bauteile, die deshalb hier nicht näher ausgeführt werden.

Als "Partikelmaterialien" oder auch als "Baumaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes Pulver, aber auch ein kohäsives schnittfestes Pulver kann verwendet werden.

"Bauraum" im Sinne der Erfindung ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt. Die Bauebene kann horizontal sein, aber beispielsweise in kontinuierlichen Verfahren auch einen Winkel bilden, sodass der Schichtauftrag schräg in einem Winkel erfolgt.

Ein "Baubehälter" im Sinne der Erfindung realisiert einen Bauraum. Er weist demnach einen Boden, Wände und eine offene Zugangsfläche, die Bauebene, auf. Der Baubehälter weist immer Teile auf, die sich relativ zum Gestell der 3D-Druckvorrichtung nicht bewegen. Austauschbare Baubehälter, sogenannte Wechselbehälter, ermöglichen es die Maschine quasi ständig zu betreiben, da die Wechselbehälter in die Maschine ein- und ausgefahren werden können. Die Teile eines ersten Bauvorganges können so außerhalb der 3D-Druckvorrichtung ausgepackt werden, während innerhalb der Maschine in einem zweiten Baubehälter bereits neue Teile gedruckt werden können.

Die "Druck- und Beschichterebene" ist erfindungsgemäß die Abstraktion des Ortes des momentan ablaufenden Bauprozesses. Da konstruktiv die Dosiereinheit und der Beschichter auf einer Verfahreinheit mit gemeinsamen Komponenten auf nahezu einer Höhe in der Vorrichtung bewegt werden, wird in dieser Beschreibung die "Druck- und Beschichterebene" als in der Oberkante einer neu aufgebrachten Schicht liegend betrachtet. Diese kann eine horizontale Ebene bilden oder in einem Winkel angeordnet sein.

Eine "Bauplattform" bewegt sich erfindungsgemäß relativ zur Druck- und Beschichterebene. Diese Relativbewegung findet während des Bauprozesses in unterbrochenen Bewegungen in Schichtstärke statt. Sie definiert die Schichtstärke.

"Behälterwand" oder "Wand" bezeichnet eine Barriere für das Partikelmaterial. Das Partikelmaterial kann nicht von einer Seite auf die andere Seite der Wand gelangen.

Eine "Dichtung" bezeichnet in dieser Schrift jeweils konstruktive Elemente die einen Durchtritt des Partikelmaterials durch Kontaktstellen zwischen relativ zueinander bewegten Wänden oder Wänden und der Bauplattform verhindert.

Die "geometrische Bauteilgrenze" bezeichnet eine Abstraktion eines Bauteiles im Baumaterial. Aufgrund des diskreten Charakters der Partikel des Baumaterials weicht das im Bauprozess entstehende Teil von der geometrischen Bauteilgrenze ab.

Das "Rückhaltesystem" ist jeweils in der Verbindungsstelle zwischen Lüftungssystem und Partikelmaterialschüttung zu finden. Seine Aufgabe ist es im Luftstrom vorhandene Partikel abzufangen. Es kann als Siebgewebe oder als poröser Körper ausgeführt sein. 3D-gedruckte Körper können ebenso als Rückhaltesystem dienen. Hierbei ist es unerheblich, ob diese schon vollständig ausgetrocknet sind. Solche Körper können auch mit dem Bauprozess erzeugt werden.

Eine "gesteuerte Luftströmung" im Sinne der Erfindung ist ein Luftstrom, der definiert durch das Baumaterial geleitet wird oder jedenfalls gezielt von außerhalb in das aufgetragenen Baumaterial eingeleitet wird und zum schnelleren Abtransport der Lösemitteldämpfe (Binderflüssigkeitsdämpfe) das aufgetragenen Baumaterial durchströmt. Dadurch wird die Binderflüssigkeit im aufgetragenen Baumaterial reduziert oder im Wesentlichen getrocknet. Die "gesteuerte Luftströmung" kann einfache Umgebungsluft sein, die vorzugsweise temperiert wird, vorzugsweise erwärmt, oder auch eine definierte Gasmischung.

"Gesteuerter Luftstrom" oder "gesteuerte Luftströmung" kann auch als "Zwangsbelüftung" bezeichnet werden und ist in einer besonderen Ausprägung eine gesteuerte Luftströmung. Die freie Konvektion im Baumaterial ist gewissermaßen das Gegenteil zur Zwangsbelüftung. Hier können Dämpfe nur durch Diffusion auf Grund von Konzentrationsgradienten abgeführt werden. Bei der Zwangsbelüftung werden die Dämpfe, d.h. Lösemitteldämpfe oder Bindermittelflüssigkeitsdämpfe, mit einem Luftstrom gesteuert und gezielt bewegt bzw. aus dem Baumaterial entfernt.

"Temperieren" oder "Temperieren des Luftstromes" bedeutet, dass die in den Bauraum eingeführte Luft oder das Gasgemisch auf eine bestimmte Temperatur eingestellt wird oder dass der Bauraum auf eine gewählte Temperatur eingestellt wird.

"Relative Luftfeuchtigkeit" bezeichnet nach der Erfindung, dass die in dem Bauraum befindliche oder ein- oder durchgeleitete Luft- oder Gasströmung in ihrer Luftfeuchtigkeit auf einen gewünschten Wert eingestellt wird. Dies kann nicht nur die Luftfeuchtigkeit, sondern auch den relativen Inhalt von Lösemitteln betreffen.

"Reduziert oder im wesentlichen getrocknet" in Bezug auf die Binderflüssigkeit bedeutet, dass die Menge an Binderflüssigkeit im Vergleich zum unmittelbaren Binderflüssigkeitsauftrag während des selektiven Auftragens vermindert ist. Vorzugsweise ist die Binderflüssigkeit soweit reduziert, dass das hergestellte Bauteil eine Festigkeit aufweist, die es soweit stabil macht, dass ein Entpacken leicht und ohne Probleme erfolgen kann. "Im wesentlichen getrocknet" bedeutet, dass das Bauteil keine oder nur noch Reste an Binderflüssigkeit enthält. Der Vorgang des "Reduzierens" oder "Trocknens" der Binderflüssigkeit wird mittels einer "gesteuerten Luftströmung" nach der Erfindung vorteilhafter Weise beschleunigt und gezielt gesteuert hinsichtlich Zeit und Menge der Reduzierung der Binderflüssigkeit.

"Schichtweise verfahren" im Sinne der Erfindung bezeichnet in einem Wechselbehälter oder in einer anderen horizontalen Bauebene den Vorgang, dass das Baufeld um eine Schichtstärke abgesenkt wird oder das oder die über dem Baufeld befindlichen Vorrichtungsteile um eine Schichtstärke hochgefahren werden. In einem kontinuierlichen Verfahren bezeichnet "schichtweise verfahren" das Verfahren des aufgetragenen Baumaterials (des Baumaterialblocks in der Druckmaschine) um eine Schichtstärke, sodass eine neue Schicht an Partikelmaterial aufgetragen werden kann und so kontinuierlich ein Schichtauftrag und selektiver Binderflüssigkeitsauftrag erfolgen kann.

"Zeitlich gesteuert durchströmen" im Sinne der Erfindung bedeutet, dass die gesteuerte Luftströmung während des Verfahrens zu einem definierten Zeitpunkt und über einen definierten Zeitraum durchgeführt wird und die gesteuerte Luftströmung regelmäßig oder unregelmäßig während des Verfahrens erfolgen kann.

"IR-Erwärmung" bedeutet in dieser Schrift eine Bestrahlung des Baufeldes mit einem IR-Strahler. Dabei kann der Strahler statisch sein oder mit einer Verfahreinheit über das Baufeld bewegt werden.

Unter "Trocknung" wird ein Verlust von Wasser oder eines anderen fluiden Stoffes eines bestimmten Volumens verstanden. Diese Trocknung kommt durch Abgabe von Feuchte oder eines anderen fluiden Stoffes an die Umgebungsluft zustande. Die Trocknung kann mit einer Härtung verbunden sein.

"Härtung" ist der Begriff für den Anstieg der Festigkeit eines Bauteils. Die Härtung bei wasserglasbasierten Systemen kann über Trocknung oder chemische Härtung erfolgen.

Die Begriffe Trocknung und Härtung sind erfindungsgemäß nicht synonym zu verstehen.

Unter "Lösen" wird der Vorgang verstanden, das Bindemittel in der Druckflüssigkeit zu lösen bzw. anzulösen. Dabei ist der Löseprozess von verschiedenen Faktoren abhängig, wie z.B. die Einwirkdauer, die Temperatur, die relative Wassermenge und z.B. der Wasserglastyp.

"Klimabedingungen in dem Bauraum einstellen" bedeutet, dass die Temperatur und/oder die relative Luftfeuchtigkeit oder der relative Lösemittelanteil in der Atmosphäre in dem Bauraum so variiert bzw. gewählt werden und durch geeignete Mittel so eingestellt werden, dass der Trocknungs- oder Härtungsprozess in dem herzustellenden Bauteil in einem gewünschten Zeitfenster verläuft und so vorteilhafte Bauteileigenschaften erzielt werden.

Bevorzugte Ausführungsformen werden im Folgenden beschrieben.

In einer bevorzugten Ausführungsform des erfindungsgemäßen Verfahrens können die Klimabedingungen in dem Bauraum so eingestellt werden, dass die Verdunstungsrate einer eingedruckten Bindeflüssigkeit oder eines flüchtigen Bestandteils in dem zu erstellenden 3D-Bauteil gesteuert werden kann. Hierbei wird die Temperatur auf einen geeigneten Bereich oder eine bestimmte Temperatur in dem Bauraum mit geeigneten Mitteln eingestellt und die Atmosphäre des Bauraums mit einem geeigneten Mittel angereichert, vorzugsweise wird ein mit dem aus dem herzustellenden 3D-Formteil verdunstenden Mittel (Wasser oder eine andere flüchtige Substanz, vorzugsweise ein bekanntes im 3D-Druck verwendetes Lösemittel) angereicherter Luftstrom in die Atmosphäre des Bauraums eingeleitet. Somit kann vorteilhafter Weise die Verdunstungsrate gesteuert werden.

Weiterhin vorteilhaft wird in dem erfindungsgemäßen Verfahren die Verdunstungsrate der eingedruckten Bindeflüssigkeit bzw. eines flüchtigen Bestandteils davon gegenüber den Bedingungen bei Raumtemperatur (vorzugsweise 21°C) und Umgebungsluftfeuchte reduziert. Die Reduzierung oder alternativ die Erhöhung beträgt vorzugsweise mindestens 50%, vorzugsweise 50 - 90%, mehr bevorzugt 50 - 70 %, noch mehr bevorzugt 60 - 80 %.

Erfindungsgemäß wird die relative Luftfeuchtigkeit im Bereich von 40% bis 70% in dem Bauraum eingestellt oder der relative Lösemittelanteil wird in einem Bereich von 50 - 80% in der Atmosphäre in dem Bauraum eingestellt.

Erfindungsgemäß wird die Temperatur in dem Bauraum reguliert.

Dabei kann über den gesamten Herstellungsprozess die gleiche Temperatur beibehalten werden oder die Stufenweise während des Produktionsverlaufs verändert werden. Die Temperatur wird auf einen Wert von 10 °C bis 50 °C, vorzugsweise von 15 °C bis 40 °C, mehr bevorzugt auf 30 °C bis 35 °C eingestellt.

Vorzugsweise werden in dem Bauraum orientierte Luftströme angelegt, die vorzugsweise eine vorbestimmte Temperatur oder/und eine vorbestimmte relative Luftfeuchtigkeit oder relativen Lösemittelanteil aufweisen wie sie oben beschrieben wurden.

Prinzipiell ist das erfindungsgemäßen Verfahren mit allen bekannten 3D-Druckverfahren und Materialsystemen, die eine wässrige oder flüchtige Komponente enthält anwendbar und zeigt Vorteile in den damit erhaltenen 3D-Bauteilen. Vorzugsweise wird das partikelförmige Material ausgewählt aus der Gruppe bestehend Sand, Metall, Polymeren, Keramik, Holz, Cellulose, Lactose, Salzen, Kohlenstoff, Hartstoffen (WC), Gläsern, Zement und Gips.

Auch als Druckflüssigkeit oder Bindeflüssigkeit kann in dem erfindungsgemäßen Verfahren jegliche bekannte fluide Substanz verwendet werden. Vorzugsweise wird die Druckflüssigkeit ausgewählt aus der Gruppe bestehend aus Wasser, Alkoholen, Estern, Ethern, Acetaten, Ketonen, Amiden, Aldehyden, Benzin, Acrylaten, Styrol, Epoxiden, Polyolen, Isocyanaten, Novolaken, Resolen, Polyestern, Peroxiden, Succinaten, Aromaten, Aliphaten und Kohlenwasserstoffen.

Vorzugsweise wird in dem erfindungsgemäßen Verfahren ein Materialsystem verwendet, umfassend im Partikelmaterial einen wasserlöslichen Binder als pulverförmiges Bindemittel und wasserunlösliche Partikel und eine wasserbasierte Binderflüssigkeit.

Die für das erfindungsgemäße Verfahren verwendbare Vorrichtung wurde oben bereits beschrieben und diese kann die folgenden bevorzugten Merkmale aufweisen:
Vorzugsweise ist der Bauraum im Wesentlichen dicht verschließbar, wodurch die Reglung der Temperatur und/oder der relativen Luftfeuchtigkeit oder der relative Anteil einer anderen Komponente leichter und konstanter einstellbar ist.

Zur Temperaturregulierung und der Einstellung der relativen Luftfeuchtigkeit im Bauraum können dem Fachmann bekannte Mittel eingesetzt werden. Vorzugsweise wird das Mittel zur Einstellung der relativen Luftfeuchtigkeit ausgewählt aus der Gruppe bestehend aus einem Wasserluftbefeuchter oder einem Lösemittelverdampfer.

Das Mittel zum Temperieren des Baurauminnenraumes wird vorzugsweise ausgewählt aus der Gruppe bestehend aus einer Luftheizeinheit oder einer IR-Strahlungseinheit.

Weiterhin kann die erfindungsgemäßen Vorrichtung Mittel zum Steuern von ein oder mehreren Luftströmen im Bauraum Innenraum umfassen, vorzugsweise zum Steuern von ein oder mehreren Luftströmen über dem Baufeld.

Dabei können die Mittel zum Steuern von ein oder mehreren Luftströmen im Bauraum Innenraum ausgewählt werden aus Rohren, Diffussoren, Düsen oder/und Umlenkblechen.

Die erfindungsgemäße Vorrichtung ist dabei so ausgestaltet, dass sie für die oben beschriebenen Materialsysteme geeignet ist sowie für die genannten Stoffen und deren Kombinationen.

Vorzugsweise kann die erfindungsgemäße Vorrichtung weiterhin eine Isolation zur Minimierung oder Vermeidung unerwünschter Konvektionsbewegungen umfassen.

### Kurze Beschreibung der Figuren:

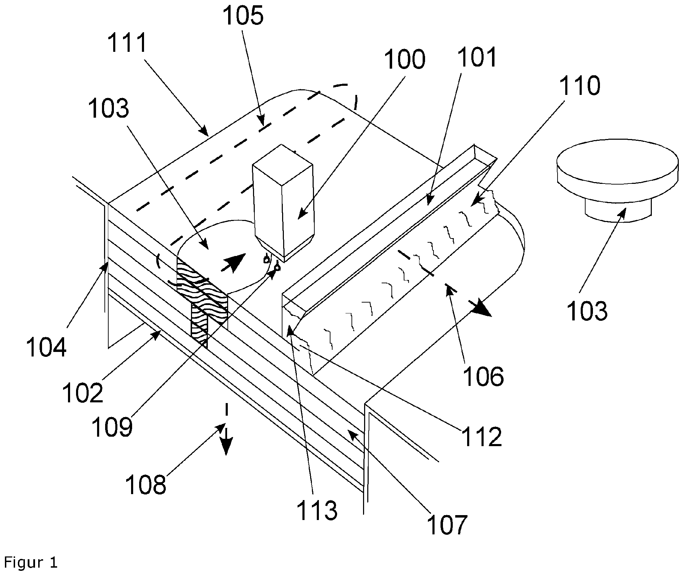

Figur 1: Schematische Darstellung der Komponenten eines pulverbasierten 3D-Druckers als geschnittener Schrägriss.
Figur 2: Schema des Ablaufes eines konventionellen 3D-Druckprozesses.

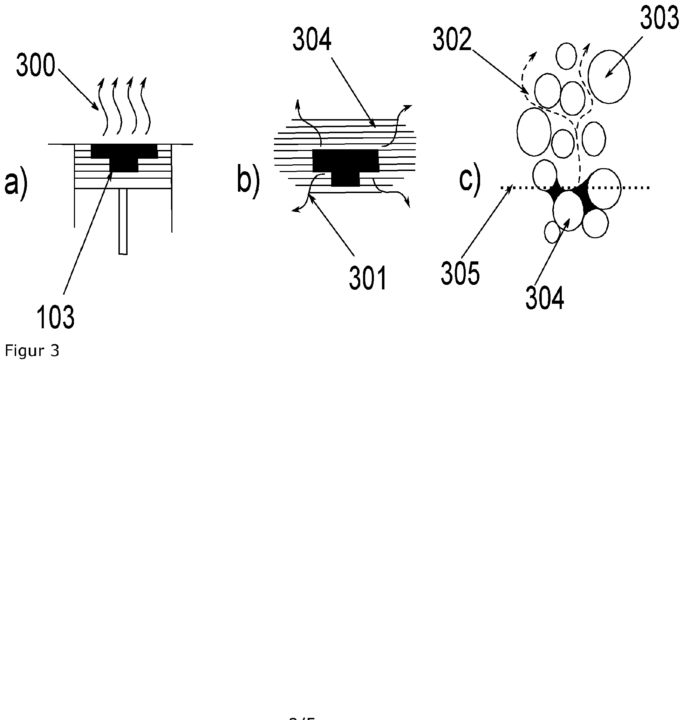

Figur 3: Trocknung mit Zwangskonvektion

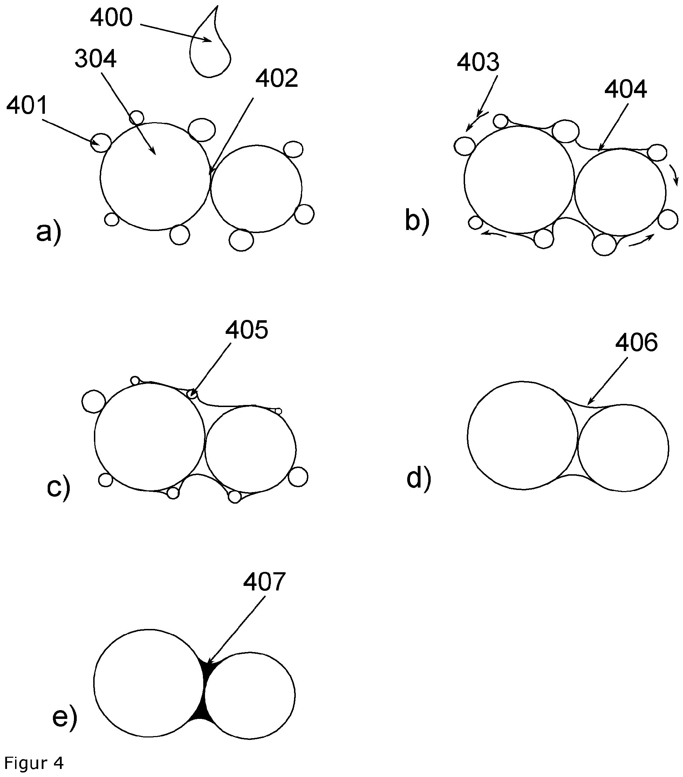

Figur 4: Illustration des Lösungsvorganges

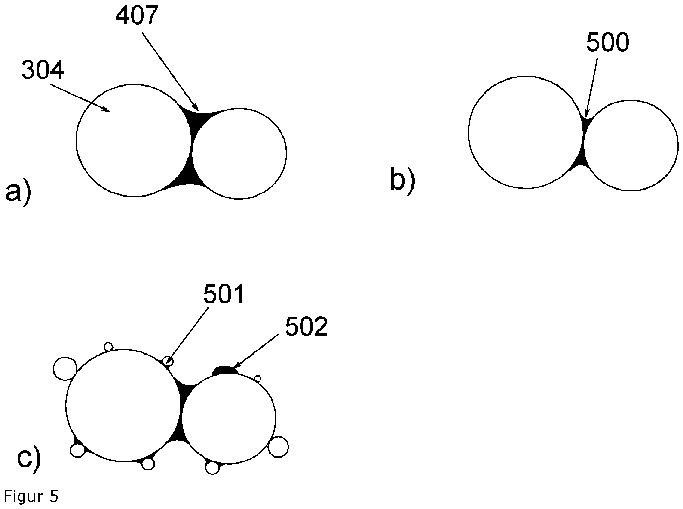

Figur 5: Verschiedene Binderbrückenausbildungen

Weitere bevorzugte Ausführungsformen werden im Folgenden dargestellt.

Die grundsätzlichen Komponenten entsprechen einem System zum schichtweisen Aufbau von Modellen mit Tintenstrahldrucktechnik wie sie dem Fachmann bekannt sind und deshalb hier nicht in allen Einzelheiten wiedergegeben werden müssen.

Dabei gliedert sich der Ablauf vorzugsweise wie folgt: Es wird eine Partikelmaterialschicht auf eine Bauplattform aufgetragen und nivelliert. Im Anschluss wird die Schicht gemäß der Schichtdaten des 3D-Modells mit einer Druckflüssigkeit bedruckt. Der wesentliche Anteil des Materials zum Verkleben der Partikel wird im Pulver in Form von trockenen Partikeln vorgehalten. Nun kann der Löseprozess durch eine Erwärmung mit einer IR-Lampe beschleunigt werden. Nach dem Druck- und Erwärmungsprozess wird die Bauplattform abgesenkt und der Prozess beginnt von vorne.

Diese Schritte werden solange wiederholt, bis das Bauteil komplett im mitgebauten Pulverkuchen vorliegt.

Die Güte der so erzeugten Bauteile wird anhand verschiedener Kriterien beurteilt. Für einen späteren Einsatz als Kern oder Form in einer Gießerei ist zum Beispiel die Festigkeit von entscheidender Bedeutung. Sie bestimmt wie einfach das Bauteil gehandhabt werden kann oder ob ein Kern den Gießprozess ohne Bruch übersteht.

Eine weitere wesentliche Größe ist die Oberflächengüte. Beim Beispiel Gießereianwendung bildet sich die Oberfläche des gedruckten Bauteils direkt auf das Gussteil ab. Ebenso wichtig ist die Maßhaltigkeit. Nur maßhaltige Bauteile können in den weiteren Schritten zu einem technisch nutzbaren Teil bearbeitet werden.

Bei einem sogenannten Wasserglas-Materialsystem stehen, wie Versuche zeigen, Festigkeit und Oberflächeneigenschaften in einem gewissen Gegensatz zueinander. Es sind mit dem beschriebenen Vorgehen leicht sehr feste Bauteile zu erzielen. Diese Teile werden mit einem hohen Anteil an Flüssigkeit gedruckt und weisen nach dem Prozess schlechte Oberflächen auf.

Ebenso lassen sich gute Oberflächen erzielen. Das Bauteil ist dann aber sehr fragil und kann nur schwer gehandhabt oder versandt werden.

Dieser Widerspruch entsteht durch den Umstand, dass das Wasserglas für das Lösen Zeit braucht. Während dieser Zeit kann die eingedruckte Flüssigkeit durch die Kapillarwirkung im Bauteil über die Grenzen der geometrisch gewünschten Form wandern und unerwünschte Anhaftungen am Bauteil erzeugen. Diese treten in der Form von Ausblühungen an der Bauteilwandung auf. Würde die Lösung schneller von statten gehen, würde die Viskosität der Druckflüssigkeit im Partikelmaterial schneller ansteigen, die Penetration der Druckflüssigkeit in angrenzende Bereiche abnehmen und damit bessere Oberflächen erzielbar sein.

Um die Lösegeschwindigkeit zu steigern, wird bei Vorrichtungen des Standes der Technik das Partikelmaterial nach dem Aufbringen durch eine IR-Lampe erwärmt. Dadurch steigt, wie Versuche mit trockenem Wasserglas zeigen, die Viskosität der Druckflüssigkeit schnell an und die Bauteile weisen bessere Oberflächen auf.

Trotz dieses Vorgehens sind manche Partikelmaterialien (z.B. einige Sandsorten) mit diesem Verfahren nicht befriedigend zu verarbeiten.

Versuche mit Vorrichtungen des Standes der Technik haben gezeigt, dass Zugluft den Prozess stark negativ beeinflusst. Hierbei können die gewohnten Festigkeiten nicht erzielt werden. Die Oberflächen wirken hingegen gut.

Es wurde nun von den Erfindern festgestellt, dass dem eine zu schnelle Abtrocknung der Flüssigkeit zu Grunde liegt. Dabei wird dann nur noch ein kleinerer Teil der Druckflüssigkeit beim Lösen wirksam und es ergibt sich eine mangelhafte Festigkeit.

Die Erfinder haben nun ein Verfahren entwickelt bei dem durch zusätzliche Luftfeuchtigkeit im Prozessraum die Abtrocknung der Druckflüssigkeit aus dem Partikelmaterial gebremst wird. Dabei kann vorzugsweise die Temperatur durch eine IR-Lampe oder andere geeignete Mittel erhöht werden und noch mehr Material in Lösung gebracht werden. Vorzugsweise wird ein gesteuerter Luftstrom über das Baufeld geleitet.

Versuche haben gezeigt, dass sich mit einem solchen System verbesserte Festigkeiten gegenüber Verfahren des Standes der Technik erreichen lassen. Gleichzeitig konnten vorteilhafter Weise trotz der hohen Festigkeiten sehr gute Oberflächen erzielt werden.

Durch die Kombination einer Wärmequelle, z.B. einer IR-Lampe, zur Erwärmung der Flüssigkeit mit der Schaffung einer feuchten Atmosphäre kann das Prozessfenster mit der Erfindung wesentlich vergrößert werden.

Somit können mit Hilfe der Erfindung unter Steigerung der Luftfeuchte Materialien verarbeitet werden, die bisher nicht oder nur mit verminderter Qualität der Formteile verwendet werden konnten. Hierzu zählen feine Sande, Sande mit außergewöhnlicher Kornform und Sonderfüllstoffe mit hohem spezifischem Gewicht.

Die Erfindung soll im Folgenden in weiteren Details beschrieben werden.

Das erfindungsgemäße System ist eng an den pulverbasierten 3D-Druck angelehnt. Die Maschinentechnik wird gemäß den erfindungsgemäßen Anforderungen erweitert.

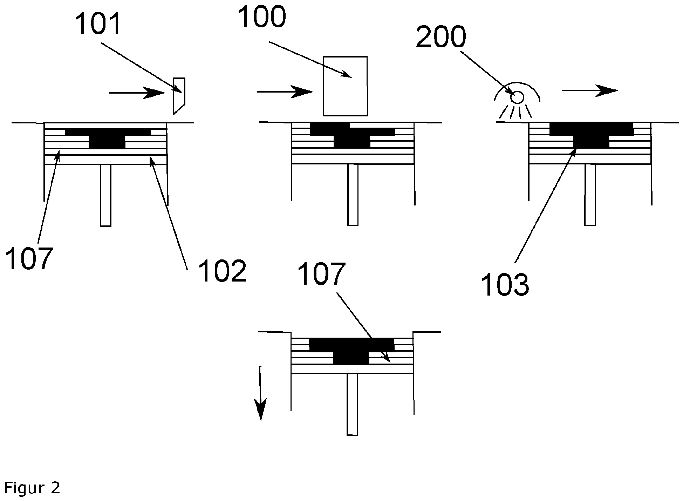

Die erfindungsgemäße Vorrichtung weist einen Pulverbeschichter (101) auf. Mit diesem wird Partikelmaterial auf eine Bauplattform (102) aufgebracht und geglättet (Figur 2(a)). Das aufgebrachte Partikelmaterial kann aus verschiedensten Materialien bestehen. Beispielsweise können Füllstoffe wie Sande, künstliche Sande und keramische Partikel verwendet werden. Die Fließeigenschaften dieser Materialien können stark unterschiedlich ausfallen. Verschiedene Beschichtertechniken lassen die Schichtbildung von trockenen frei fließenden Pulvern, über kohäsive schnittfeste Pulver, bis hin zu flüssigkeitsbasierten Dispersionen zu. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen. Das Ergebnis ist eine nahezu perfekt parallele und glatte Schicht definierter Höhe.

Nach einem Beschichtungsprozess wird die Schicht mittels eines Tintenstrahldruckkopfes (100) mit einer Druckflüssigkeit bedruckt (Figur 2(b)). Das Druckbild entspricht dem Schnitt durch das Bauteil in der aktuellen Bauhöhe der Vorrichtung. Die Flüssigkeit trifft auf das Partikelmaterial und diffundiert langsam hinein.

Nach dem Drucken des Binders kann die Schicht erwärmt werden (Figur 2(c)). Dazu kann beispielsweise ein IR-Strahler (200) über das Baufeld geführt werden. Dieser kann mit der Achse des Beschichtungssystems gekoppelt sein. Während des Heizens verdampft ein Teil des flüssigen Bindemittels.

Im Anschluss an diesen Heizprozess wird die Bauplattform (102) um eine Schichtstärke abgesenkt. Die Schritte Schichtbilden, Bedrucken, Erwärmen und Absenken werden nun solange wiederholt bis das gewünschte Bauteil (103) vollständig erstellt ist.

Das Bauteil (103) liegt jetzt vollständig im Pulverkuchen (602) vor. Je nach dem welcher physikalische oder chemische Prozess der Verbindung der Partikel (303) zu Grunde liegt, ist das Bauteil nun mehr oder weniger verfestigt. Meist liegt direkt nach dem Drucken ein weicher Zustand vor.

Dieser Zustand stellt solange das Bauteil (103) im Pulver (107) gestützt durch das umliegende Partikelmaterial liegt, kein Problem dar. Sobald das Bauteil allerdings aus dem Pulver entpackt wird, ist eine geometrische Deformation durch die Schwerkraft und andere Kraftwirkungen unvermeidbar.

Deshalb wird das Bauteil üblicherweise im Pulver belassen. Das überschüssige Bindemittel (301), das das Bauteil (103) nicht fest werden lässt, verdampft jetzt über verschiedene Dampfkanäle (302) im ungebundenen Partikelmaterial (303). Die Bindungen des gebundenen Partikelmaterials (304) in der geometrischen Bauteilgrenze (305) verfestigen dabei immer mehr. Nach einer bestimmten Wartezeit ist der Körper (103) ausreichend fest, um ihn entpacken zu können.

Bei einem erfindungsgemäßen Materialsystem mit wasserglasbasiertem Bindemittel können die Teile relativ rasch nach den Drucken entpackt werden. Dank der Erwärmung mit der IR-Lampe (200) sind hier Wartezeiten kleiner als 2 Stunden einzuhalten.

Der Verfestigungsprozess läuft dabei wie folgt ab: Die Druckflüssigkeit (400) trifft auf das Partikelmaterial (304, 401) und dringt durch Kapillarwirkung in des Pulver ein. Dabei wird die Druckflüssigkeit immer weiter in einem als Sphäre anzunähernden Raum verteilt (403).

Innerhalb des Partikelmaterials benetzt die Druckflüssigkeit sowohl passive Füllstoff-Partikel (304) als auch Wasserglaskörner (401). Das Wasserglas liegt in feinen diskreten Partikeln (401) vor, die durch eine intensive Mischung des Materials nahezu gleich verteilt sind.

Die benetzten Wasserglaskörner (404) werden durch den flüssigen Binder nach und nach angelöst, verlieren dabei an Durchmesser (405) und steigern die Viskosität der Druckflüssigkeit. In diesem Stadium sinkt die Ausbreitungsgeschwindigkeit der Flüssigkeitsmenge.

Die Benetzung ist in diesem Stadium, bei angepasster Druckflüssigkeitsmenge, soweit ausreichend, dass die einzelnen Zwickel zwischen den Füllstoff-Partikeln miteinander über die Druckflüssigkeit in Kontakt stehen (404). Idealerweise löst sich das gesamte Wasserglas und es ergibt sich eine homogene Flüssigkeit (406).

Durch die Lagerung des Bauteils im Partikelmaterial wird der angedickten Druckflüssigkeit im nächsten Stadium Feuchte entzogen. Diese Flüssigkeit wird zum Teil von der sehr trockenen Pulverumgebung absorbiert.

Der Feuchtigkeitsentzug sorgt für ein weiteres Andicken der Flüssigkeit. Diese zieht sich dabei durch Kapillarwirkung in die Bereiche zwischen den Füllstoff-Partikeln zurück. Hier trocknet sie immer weiter, bis am Schluss eine feste Wasserglasbrücke (407) zurückbleibt. Damit sind die Partikel (304) verbunden und ein fester Körper ist entstanden.

Meistens werden die Wasserglaskörner zwar angelöst, die Viskositätssteigerung reicht aber nicht aus, um eine weitere Verbreitung der Flüssigkeit zu verhindern. Die Folge sind Anhaftungen am Bauteil. Diesem Effekt durch die Zugabe von weniger Flüssigkeit zu begegnen, ist nicht zielführend, da sich dann keine ausreichenden Binder-Brücken (500) und damit Festigkeiten mehr bilden können. Vielmehr kann diesem Effekt mit Variation der Druckflüssigkeitsmenge nicht begegnet werden, da abgestimmte Mengen von Wasser zur Gesamtmenge des Wasserglases nur im vollständig gelösten Zustand sinnvoll definiert werden können. Im Anfangsstadium bei wenig gelöstem Material also immer ein Wasserüberschuss vorliegt.

Deshalb ist es sinnvoll die Lösegeschwindigkeit zu steigern. Die Erwärmung mit einer IR-Lampe ist hier effektiv. Nun ist die Phase des Wasserüberschusses deutlich kürzer als zuvor. Der Einfluss auf die Viskosität kann demgegenüber vernachlässigt werden.

Durch die Erwärmung wird aber zudem der Dampfdruck der Druckflüssigkeit gesteigert. Es verdampft eine große Menge der Druckflüssigkeit bereits während der Erstellung der Schichten. Ebenso wird dem Bauteil durch das trockene umgebende Pulver Feuchte rasch entzogen. Der beschleunigte Löseprozess wird durch ein zu starkes Andicken der Druckflüssigkeit zu rasch abgebrochen und es kommt zu unvollständigen Bindungen zwischen den Partikeln (500). Ein Teil des Wasserglases liegt hierbei noch in Partikelform an Stellen vor, die keinen Beitrag zu Festigkeit des Bauteils liefern (501,502).

Diesem Verdampfungsprozess kann mit der erfindungsgemäßen Regelung der Luftfeuchte und der Temperatur im Bauraum begegnet werden. Das heißt, dass die Luft im geschlossenen Bauraum auf einen Temperaturbereich von 18 - 40 °C, bevorzugt von 30 - 35 ° C geregelt wird und die relative Luftfeuchte dann in einem Bereich von 40 - 70%, bevorzugt 60 - 70% geregelt wird. Die Regelung von Temperatur und Luftfeuchte kann z.B. über ein externes Klimagerät erfolgen, wobei entsprechende Sensoren für Temperatur und Luftfeuchte im Prozessraum untergebracht sind. Die über das Klimagerät geführte Prozessluft, sollte dann möglichst über entsprechende Diffusoren zugfrei in den Prozessraum eingeblasen werden.

Durch den hohen Partialdruck des Wassers in der Umgebungsluft sinkt die Abdampfrate aus dem Partikelmaterial. Zudem wird das Partikelmaterial kontinuierlich befeuchtet, da die Wasserglaspartikel stark hygroskopisch wirken.

Dieses verhinderte Abdampfen ermöglicht es, dass große Mengen Wasserglas auf Grund der Temperatur schnell gelöst werden können. Dabei können nahezu ideale Bindungen (407) entstehen. Das Verhältnis von Festigkeit zur Oberflächengüte ist, wie die Versuche zeigen, deutlich besser, als ohne die Befeuchtung.

Bisher sind für die Bindung durch trockenes Wasserglas nur Spezialsande geeignet. So eignen sich beispielweise kugelrunde Flusssande mit einer speziellen Oberflächentextur. Ebenso können künstliche Sand verarbeitet werden. Beide Werkstoffe sind teuer in der Beschaffung und deshalb für einen breiten Einsatz nicht geeignet.

Mit dem erfindungsgemäßen Verfahren kann jetzt ein deutlich breiteres Spektrum an Partikelmaterialien verarbeitet werden. Unter Anderem z.B. Sand des Typ Strobel GS14 und GS09 der ohne das erfindungsgemäße Verfahren eine zu niedrige Festigkeit bei akzeptabler Oberfläche liefert. So liegen bei diesen Sanden die Biegefestigkeiten bei konventionellem Druckverfahren und akzeptabler Oberfläche kleiner 90 N/cm². Diese Festigkeit ist für eine sichere Reinigung der Bauteile und einen Transport unzureichend. Die gleichen Sande können ohne jede Änderung der Sandrezeptur mit der erfindungsgemäßen Befeuchtung eine Festigkeit von 290-300N/cm² erreichen.

Besondern scharfkantig gebrochene Materialien profitieren von diesem Festigkeitszuwachs. Erst durch diese Maßnahme wird so der Einsatz von Olivinsand möglich.

Ebenso wirksam ist die Maßnahme aber auch bei Sonderformstoffen. Hier können ebenfalls signifikante Festigkeitssteigerungen erzielt werden die das Einsatzspektrum hin zu immer komplexeren Formen erweitern.

Die erfindungsgemäße Vorrichtung ist an einen 3D-Drucker des Standes der Technik angelehnt. Dabei muss mindestens eine bewegliche oder stehende IR-Strahlungsquelle vorhanden sein.

Über den Stand der Technik hinaus geht die Klimatisierung des Bauraums. Hierbei muss ein geregeltes Luftbefeuchtungssystem zum Einsatz kommen. Als Feuchtigkeitsquelle kann dabei ein Heizelement in Wasser eingesetzt werden. Die im Bauraum gemessene Feuchte bestimmt dann die Leistung des Heizelementes.

Die Verteilung der feuchten Luft erfolgt beispielsweise über Ventilatoren. Hierbei sollte der Luftzug über dem Baufeld gering gehalten werden. Trotz der hohen Luftfeuchte würde sonst der frisch gedruckten Schicht zu viel Wasser entzogen werden.

Die feuchte Luft wird über Rohre oder Leitbleche in die Nähe des Baufeldes geführt.

Besonders bevorzugt ist eine Koppelung dieser Regelung mit der Drucksteuerung der Maschine. Dabei können die durch den Tintenstrahldruckkopf erzeugten Tropfen mit in die Feuchtigkeitsregelung einbezogen werden.

Ebenso bevorzugt ist die Kombination der Feuchteregelung mit einer Temperaturregelung. Dabei kann die Temperatur im Pulverbett durch die IR-Lampe wesentlich genauer gesteuert werden. Somit sind besser reproduzierbare Druckergebnisse möglich.

Die Vorteile des erfindungsgemäßen Prozesses können bei allen Materialgemischen genutzt werden, bei denen Wasser-basierte Druckflüssigkeiten verwendet werden, um im Wesentlichen wasserlösliche, pulverförmige Bindemittel selektiv gelöst werden, um umliegende Füllstoffe durch einen anschließenden Trocknungsprozess zu binden. Insofern ist die Erfindung nicht auf wasserglasbasierte Binder begrenzt, sondern kann z.B. auch bei Gips-basierten oder Zement-basierten Bindern angewendet werden.

### Bezugszeichenliste

- 100: Druckkopf
- 101: Beschichter
- 102: Bauplattform
- 103: Bauteil
- 104: Baubehälter
- 105: Druckkopfbahn
- 106: Beschichterbahn
- 107: Pulverschichten
- 108: Richtung der Bauplattformbewegung
- 109: Dosierte Tropfen
- 110: Pulverwalze
- 111: Baufeldberandung
- 112: Beschichterspalt
- 113: Beschichtervorrat
- 200: IR-Strahler
- 300: Abdampfendes Material bei offener Schicht
- 301: Ins Pulver abdampfendes Material
- 302: Möglicher Dampfkanal
- 303: Ungebundenes Partikel
- 304: Gebundenes Partikel
- 305: Geometrische Bauteilgrenze
- 400: Flüssigkeitstropfen
- 401: Wasserglaspartikel
- 402: Zwickel zwischen passiven Partikeln
- 403: Diffusionsrichtung der Flüssigkeit
- 404: Flüssigkeitsfilm mit Verbindung zwischen den Wasserglaskörnern
- 405: Durch Lösen verkleinerter Wasserglaspartikel
- 406: Eingedickte Lösung
- 407: Feste Bindung
- 500: Schwache Binderbrücke
- 501: Nicht an der Bindung beteiligte Brücke mit Wasserglaspartikel
- 502: Nicht wirksame Eintrocknung

## Patentansprüche

1. Verfahren zum Herstellen von 3D-Bauteilen, wobei schichtweise Partikelmaterial auf einer Bauplattform (102) in einem geschlossenen Bauraum und selektiv Druckflüssigkeit aufgebracht wird und diese Schritte wiederholt werden bis ein dreidimensionales Bauteil (103) erhalten wird, wobei die Temperatur in dem Bauraum auf eine ausgewählte Temperatur im Bereich von 10° C bis 50° C geregelt wird und eine relative Luftfeuchte im Bereich von 40% bis 70% in dem Bauraum eingestellt wird oder der relative Lösemittelanteil in einem Bereich von 50 - 80% in der Atmosphäre in dem Bauraum eingestellt wird.

2. Verfahren nach Anspruch 1, wobei die Klimabedingungen in dem Bauraum so eingestellt werden können, dass die Verdunstungsrate einer eingedruckten Bindeflüssigkeit oder eines flüchtigen Bestandteils in dem zu erstellenden 3D-Bauteil gesteuert werden kann, vorzugsweise
wobei die Verdunstungsrate der eingedruckten Bindeflüssigkeit bzw. eines flüchtigen Bestandteils davon gegenüber den Bedingungen bei Raumtemperatur, 21°C, und Umgebungsluftfeuchte reduziert wird, vorzugsweise um mindestens 50%, vorzugsweise um 50 - 90%, mehr bevorzugt um 50 - 70 %, noch mehr bevorzugt um 60 - 80 % reduziert wird.

3. Verfahren nach einem der vorhergehenden Ansprüche, wobei in dem Bauraum orientierte Luftströme angelegt werden, die vorzugsweise eine vorbestimmte Temperatur oder eine vorbestimmte relative Luftfeuchtigkeit aufweisen.

4. Verfahren nach einem der vorhergehenden Ansprüche, wobei das partikelförmige Material ausgewählt wird aus der Gruppe bestehend aus Sand, Metall, Polymeren, Keramik, Holz, Cellulose, Lactose, Salzen, Kohlenstoff, Hartstoffen (WC), Gläsern, Zement und Gips.

5. Verfahren nach einem der vorhergehenden Ansprüche, wobei die Druckflüssigkeit ausgewählt wird aus der Gruppe bestehend aus Wasser, Alkoholen, Estern, Ethern, Acetaten, Ketonen, Amiden, Aldehyden, Benzin, Acrylaten, Styrol, Epoxiden, Polyolen, Isocyanaten, Novolaken, Resolen, Polyestern, Peroxiden, Succinaten, Aromaten, Aliphaten und Kohlenwasserstoffen.

6. Verfahren nach einem der vorhergehenden Ansprüche, wobei ein Materialsystem verwendet wird, umfassend im Partikelmaterial einen wasserlöslichen Binder als pulverförmiges Bindemittel und wasserunlösliche Partikel und eine wasserbasierte Binderflüssigkeit.

7. Vorrichtung geeignet für ein 3D-Druckverfahren, umfassend
a. einen Druckkopf (100) zum selektiven Binderauftrag,
b. einen Beschichter (101) zum Auftrag eines partikelförmigen Materials auf einer Bauplattform (102),
c. einen geschlossenen Bauraum,
d. Mittel (200) zum Bestrahlen des Baufeldes mit Infrarotstrahlung,
e. Mittel zur Temperaturregulierung des Baurauminnenraumes,
f. Mittel zur Einstellung der relativen Luftfeuchte oder einem relativen Lösemittelanteil in der Atmosphäre in dem Bauraum,
wobei die Temperatur in dem Bauraum auf eine ausgewählte Temperatur im Bereich von 10° C bis 50° C geregelt wird, und eine relative Luftfeuchte im Bereich von 40% bis 70% in dem Bauraum eingestellt wird oder der relative Lösemittelanteil in einem Bereich von 50 - 80 % in der Atmosphäre in dem Bauraum eingestellt wird.

8. Vorrichtung nach Anspruch 7, wobei der Bauraum im Wesentlichen dicht verschließbar ist.

9. Vorrichtung nach Anspruch 7 oder 8, wobei das Mittel zur Einstellung der relativen Luftfeuchtigkeit ausgewählt ist aus der Gruppe bestehend aus einem Wasserluftbefeuchter oder einem Lösemittelverdampfer.

10. Vorrichtung nach Anspruch 7, 8 oder 9, wobei das Mittel zum Temperieren des Baurauminnenraumes ausgewählt ist aus der Gruppe bestehend aus einer Luftheizeinheit oder einer IR-Strahlungseinheit.

11. Vorrichtung nach einem der Ansprüche 7 bis 10, wobei die Vorrichtung weiterhin umfasst Mittel zum Steuern von ein oder mehreren Luftströmen im Bauraum Innenraum, vorzugsweise zum Steuern von ein oder mehreren Luftströmen über dem Baufeld.

12. Vorrichtung nach einem der Ansprüche 7 bis 11, wobei die Mittel zum Steuern von ein oder mehreren Luftströmen im Bauraum Innenraum ausgewählt ist aus Rohren, Diffussoren, Düsen oder/und Umlenkblechen.

13. Vorrichtung nach einem der Ansprüche 7 bis 12, wobei die Vorrichtung weiterhin umfasst eine Isolation zur Minimierung oder Vermeidung unerwünschter Konvektionsbewegungen.

14. Vorrichtung nach einem der Ansprüche 7 bis 13,
wobei die Vorrichtung geeignet ist für Materialsysteme aus den in den Ansprüchen 4 und 5 genannten Stoffen und deren Kombination.

## Claims

1. A method of manufacturing 3D parts, wherein particulate material is deposited layer by layer on a build platform (102) in a closed build space and printing liquid is selectively applied and these steps are repeated until a three-dimensional part (103) is obtained, wherein the temperature in the build space is controlled to a selected temperature in the range of 10°C to 50°C and a relative humidity in the range of 40% to 70% is set in the build space or the relative solvent content is set in a range of 50-80% in the atmosphere in the build space.

2. The method according to claim 1, wherein the climatic conditions in the build space can be adjusted such that the evaporation rate of an imprinted binding liquid or a volatile component in the 3D part to be produced can be controlled, preferably
wherein the evaporation rate of the imprinted binding liquid or a volatile component thereof is reduced, preferably by at least 50%, preferably by 50 - 90%, more preferably by 50 - 70%, even more preferably by 60 - 80%, compared to the conditions at room temperature, 21°C, and ambient air humidity.

3. The method according to any one of the preceding claims, wherein oriented air flows are applied in the build space, which preferably have a predetermined temperature or a predetermined relative humidity.

4. The method according to any one of the preceding claims, wherein the particulate material is selected from the group consisting of sand, metal, polymers, ceramics, wood, cellulose, lactose, salts, carbon, hard materials (WC), glasses, cement and gypsum.

5. The method according to any one of the preceding claims, wherein the printing liquid is selected from the group consisting of water, alcohols, esters, ethers, acetates, ketones, amides, aldehydes, gasoline, acrylates, styrene, epoxides, polyols, isocyanates, novolaks, resols, polyesters, peroxides, succinates, aromatics, aliphatics and hydrocarbons.

6. The method according to any one of the preceding claims, wherein a material system is used comprising in the particulate material a water-soluble binder as a pulverulent binder and water-insoluble particles and a water-based binding liquid.

7. A device suitable for a 3D printing method, comprising
a. a print head (100) for selective binder application,
b. a recoater (101) for applying a particulate material onto a build platform (102),
c. a closed build space,
d. means (200) for irradiating the build field with infrared radiation,
e. means for controlling the temperature inside the build space,
f. means for adjusting the relative humidity or a relative solvent content in the atmosphere in the build space,
wherein the temperature in the build space is controlled to a selected temperature in the range of 10°C to 50°C and a relative humidity in the range of 40% to 70% is set in the build space or the relative solvent content is set in a range of 50-80% in the atmosphere in the build space.

8. The device according to claim 7, wherein the build space can be substantially sealed.

9. The device according to claim 7 or 8, wherein the means for adjusting the relative humidity is selected from the group consisting of a water humidifier or a solvent evaporator.

10. The device according to claim 7, 8 or 9, wherein the means for controlling the temperature inside the build space is selected from the group consisting of an air heating unit or an IR radiation unit.

11. The device according to any one of claims 7 to 10, wherein the device further comprises means for controlling one or more air flows inside the build space, preferably for controlling one or more air flows above the build field.

12. The device according to any one of claims 7 to 11, wherein the means for controlling one or more air flows inside the build space is selected from pipes, diffusers, nozzles or/and baffles.

13. The device according to any one of claims 7 to 12, wherein the device further comprises insulation for minimizing or preventing undesired convection movements.

14. The device according to any one of claims 7 to 13, wherein the device is suitable for material systems comprising the substances mentioned in claims 4 and 5 and combinations thereof.

## Revendications

1. Procédé de fabrication de composants 3D, dans lequel un matériau particulaire est appliqué en couches sur une plateforme de construction (102) dans un espace de construction fermé et un liquide d'impression est appliqué de manière sélective, et ces étapes sont répétées jusqu'à ce qu'un composant tridimensionnel (103) soit obtenu, la température dans l'espace de construction étant régulée à une température choisie dans la plage de 10°C à 50°C, et une humidité relative de l'air dans la plage de 40% à 70% étant ajustée dans l'espace de construction ou le taux de solvant relatif étant ajusté dans une plage de 50 à 80% dans l'atmosphère dans l'espace de construction.

2. Procédé selon la revendication 1, dans lequel les conditions climatiques dans l'espace de construction peuvent être ajustées de manière à pouvoir contrôler le taux d'évaporation d'un liquide liant imprimé ou d'un composant volatil dans le composant 3D à créer, de préférence
dans lequel le taux d'évaporation du liquide liant imprimé ou d'un composant volatil de celui-ci est réduit par rapport aux conditions de température ambiante, 21°C, et d'humidité ambiante, de préférence d'au moins 50 %, de préférence de 50 à 90 %, plus préférablement de 50 à 70 %, encore plus préférablement de 60 à 80 %.

3. Procédé selon l'une quelconque des revendications précédentes, dans lequel on applique dans l'espace de construction des flux d'air orientés, présentant de préférence une température prédéterminée ou une humidité relative prédéterminée.

4. Procédé selon l'une quelconque des revendications précédentes, dans lequel le matériau particulaire est choisi dans le groupe constitué par le sable, le métal, les polymères, la céramique, le bois, la cellulose, le lactose, les sels, le carbone, les matériaux durs (WC), les verres, le ciment et le plâtre.

5. Procédé selon l'une quelconque des revendications précédentes, dans lequel le liquide d'impression est choisi dans le groupe constitué par l'eau, les alcools, les esters, les éthers, les acétates, les cétones, les amides, les aldéhydes, l'essence, les acrylates, le styrène, les époxydes, les polyols, les isocyanates, les novolaques, les résols, les polyesters, les peroxydes, les succinates, les aromatiques, les aliphatiques et les hydrocarbures.

6. Procédé selon l'une quelconque des revendications précédentes, dans lequel on utilise un système de matériaux comprenant, dans le matériau particulaire, un liant soluble dans l'eau comme liant en poudre et des particules insolubles dans l'eau et un liquide liant à base d'eau.

7. Dispositif adapté à un procédé d'impression 3D, comprenant
a. une tête d'impression (100) pour l'application sélective d'un liant,
b. un enducteur (101) pour appliquer un matériau particulaire sur une plateforme de construction (102),
c. un espace de construction fermé,
d. des moyens (200) pour irradier le champ de construction avec un rayonnement infrarouge,
e. des moyens de régulation de la température à l'intérieur de l'espace de construction,
f. des moyens de réglage de l'humidité relative de l'air ou d'une proportion relative de solvant dans l'atmosphère dans l'espace de construction,
dans lequel la température dans l'espace de construction est régulée à une température sélectionnée dans la plage de 10°C à 50°C et une humidité relative de l'air dans la plage de 40% à 70% est ajustée dans l'espace de construction ou le taux de solvant relatif est ajusté dans une plage de 50 à 80% dans l'atmosphère dans l'espace de construction.

8. Dispositif selon la revendication 7, dans lequel l'espace de construction peut être fermé de manière sensiblement étanche.

9. Dispositif selon la revendication 7 ou 8, dans lequel le moyen de réglage de l'humidité relative est choisi dans le groupe constitué par un humidificateur d'eau ou un évaporateur de solvant.

10. Dispositif selon la revendication 7, 8 ou 9, dans lequel le moyen de régulation de la température à l'intérieur de l'espace de construction est choisi dans le groupe constitué par une unité de chauffage d'air ou une unité de rayonnement IR.

11. Dispositif selon l'une quelconque des revendications 7 à 10, dans lequel le dispositif comprend en outre des moyens pour contrôler un ou plusieurs flux d'air à l'intérieur de l'espace de construction, de préférence pour contrôler un ou plusieurs flux d'air au-dessus du champ de construction.

12. Dispositif selon l'une quelconque des revendications 7 à 11, dans lequel les moyens pour contrôler un ou plusieurs flux d'air à l'intérieur de l'espace de construction sont choisis parmi des tubes, des diffuseurs, des buses ou/et des déflecteurs.

13. Dispositif selon l'une quelconque des revendications 7 à 12, dans lequel le dispositif comprend en outre une isolation pour minimiser ou éviter les mouvements de convection indésirables.

14. Dispositif selon l'une quelconque des revendications 7 à 13, dans lequel le dispositif est adapté à des systèmes de matériaux constitués des substances mentionnées dans les revendications 4 et 5 et de leur combinaison.
